Europäisches Patentamt

European Patent Office

Office européen des brevets

(19)

(11) **EP 1 130 440 A2**

(12) **EUROPEAN PATENT APPLICATION**

(43) Date of publication:
**05.09.2001 Bulletin 2001/36**

(51) Int Cl.⁷: **G02B 21/00**

(21) Application number: **01103740.5**

(22) Date of filing: **15.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.02.2000 JP 2000046823**

(71) Applicant: **SONY CORPORATION**
**Tokyo (JP)**

(72) Inventors:
• **Ichimura, Isao**
**Shinagawa-ku, Tokyo (JP)**

• **Kishima, Koichiro**
**Shinagawa-ku, Tokyo (JP)**
• **Osato, Kiyoshi**
**Shinagawa-ku, Tokyo (JP)**

(74) Representative: **Körber, Wolfhart, Dr. et al**
**Patent- und Rechtsanwälte Mitscherlich & Partner,**
**Sonnenstrasse 33**
**80331 München (DE)**

(54) **Apparatus and method for position control of optical system and storage and reproduction apparatus**

(57) A position control apparatus of an optical system capable of positioning a lens at a high accuracy in a near-field optical system using a solid immersion lens. An objective lens 2 and a solid immersion lens are fixed to a lens holder 4. The lens holder 4 is moved by a tracking actuator 5 in the tracking direction of an optical disk 51 and is moved by a focus actuator 8 in the focus direction. The focus actuator 8 is controlled on the basis of the electrostatic capacitance occurring between the solid immersion lens 3 and the optical disk 51.

FIG. 1

**EP 1 130 440 A2**

**Description**

BACKGROUND OF THE INVENTION

1. Field of the Invention

The present invention relates to a position control apparatus and position control method of an optical system that irradiates converging light on an optical storage medium and to a storage and reproduction apparatus that irradiates a converging light beam on an optical storage medium and stores or reproduction information.

2. Descriptions of the Related Art

As optical apparatuses, for example, there are apparatuses that record or reproduction information using optical disks and other optical recording media, optical microscopes, etc.

In an optical apparatus, a cutoff spacial frequency fc is generally expressed by the following equation (1), using the numerical aperture NA of an objective lens and the wavelength $\lambda$ of the emitting light of a light source.

$$fc=2NA/\lambda \tag{1}$$

The shorter the wavelength $\lambda$ of the light from the light source or the greater the numerical aperture NA of the objective lens, the higher the resolving power thereof, thus enabling recording at high density using a storage and reproduction apparatus and the more detailed the observations using an optical microscope.

As a method of increasing the numerical aperture NA of an objective lens, there is known a near-field optical system employing a solid immersion lens (SIL). With this method, an optical system having a numerical aperture exceeding 1 has been achieved.

As a reference on near-field optical systems and solid immersion lenses, there is S. M. Mansfield, W. R. Studenmund, G. S. Kino, and K. Osato, "High-numerical-aperture lens system for optical storage", Opt. Lett. 18, pp. 305-307 (1993) (hereinafter referred to as "reference 1").

In addition, as another reference, there is H. J. Mamin, B. D. Terris, and D. Rugar, "Near-field optical data storage", Appl. Phys. Lett. 68, pp. 141-143(1996) (hereinafter referred to as "reference 2") .

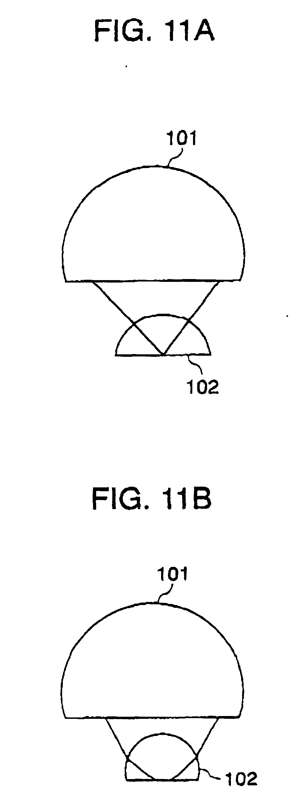

In the above reference 1, as shown in Fig. 11A, laser light converged by an objective lens 101 strike the spherical incidence surface of the solid immersion lens 102 and is emitted from the flat emission surface of the solid immersion lens 102.

At this time, because the laser light from the objective lens 101 perpendicularly strikes the spherical incidence surface of the solid immersion lens 102, this light is converged at the center of the emission surface of the solid immersion lens 102.

In this way, if the refractive index of the solid immersion lens 102 is n, the numerical aperture of the objective lens 101 can be substantially enlarged n-fold.

But in practice, because it is required to make the light emitted from the solid immersion lens 102 converge on a not shown optical storage medium, the light emitted from the objective lens 101 is made to refract more or less on the spherical surface of the solid immersion lens 102, as shown in Fig. 11B, so the actual convergence point is positioned on the optical storage medium.

Japanese Unexamined Patent Publication (Kokai) No. 8-212579 discloses an optical apparatus employing the aforesaid near-field.

This optical apparatus comprises a first lens holder for holding an objective lens and a second lens holder for holding a solid immersion lens. The first lens holder and the second lens holder are driven by a first actuator and a second actuator, respectively, and move in the focus direction.

In addition, focus control is performed by controlling the first actuator on the basis of the electrostatic capacitance formed by the solid immersion lens and between a conductive material and an optical disk. The distance between the solid immersion lens and the optical disk is maintained in a certain range.

However, in the optical apparatus disclosed in the aforesaid Japanoso Unexamined Patent Publication (Kokai) No. 8-212579, because two actuators are used for focus control, there are the problems that the optical head ends up becoming heavy and large in size while and the positioning accuracy of the optical head declines.

In addition, in this optical apparatus, there is the problem that electrical and machanical interferences between actuators easily occur and the precision of focus control is low.

In addition, this publication has no descriptions about the mechanism and control for causing the lens to move in the tracking direction and in the direction of the signal string on the optical storage medium.

## SUMMARY OF THE INVENTION

A first object of the present invention is to provide a position control apparatus of an optical system and a position control method of an optical system and a storage and reproduction apparatus which are able to reduce the weight and size of the optical head when a near-field optical system employing a solid immersion lens is adopted.

In addition, a second object of the present invention is to provide a position. control apparatus of an optical system and a positon control method of an optical system and a storage and reproduction apparatus which are able to achieve high precision focus control when the aforesaid near-field optical system is adopted.

In addition, a third object of the present invention is to provide a position control apparatus of an optical system and a position control method of an optical system and a storage and reproduction apparatus which are able to make a lens move in a tracking direction and a signal string direction on an optical storage medium when the aforesaid near-field optical system is adopted.

In order to solve the above problems of the related art and achieve the above object, the position control apparatus of an optical system of a first aspect of the present invention comprises an optical system forming a near-field with an optical storage medium and irradiating a converging light beam to the optical storage medium, wherein an objective lens converging the light beam to be irradiated on the optical storage medium and a solid immersion lens with an electrode formed on a surface facing the optical storage medium and irradiating the light beam converged by the objective lens to the optical storage medium are fixed by a holding means, an actuator for moving the holding means in the focus direction perpendicularly intersecting the storage surface of the optical storage medium, and a control circuit for controlling the actuator on the basis of electrostatic capacitance formed by the electrode and the optical storage medium and of a reflected light from the optical storage medium so that the distance between the solid immersion lens and the optical storage medium becomes within the region where the near-field is formed.

The functions of the position control apparatus of an optical system according to the first aspect of the present invention are as follows.

The holding means in the optical system is placed at a specific position in the focus direction.

Here, there arises electrostatic capacitance between the optical storage madium and the electrode formed on the solid immersion lens.

In addition, in the optical system, the light emitted from a specific light source is emitted to the optical storage medium through the solid immersion lens after being focused by the objective lens. This light is reflected by the optical storage medium.

In the control circuit, the actuator is controlled on the basis of electrostatic capacitance formed by the electrode and the optical storage medium and of the reflected light from the optical storage medium. The distance between the solid immersion lens and the optical storage medium is adjusted so as to be within the region where the near-field is formed.

In this position control apparatus of an optical system, the objective lens and the solid immersion lens are fixed by a holding means. The holding means is moved by the actuator.

Tharafora, compared with the optical apparatus described previously, the number of actuators can be decreased, the influence due to the interference between actuators can be reduced, and an optical head of reduced size and weight is achievable. Consequently, it becomes possible to position the objective lens and the solid immersion lens in the focus direction at a high precision.

In addition, in the position control apparatus of an optical system according to the first aspect of the present invention, preferably the numerical aperture of the optical system is greater than 1 and not greater than 3, the region where the near-field is formed is in a contactless state with the optical system and optical storage medium, the distance is in the range no more than 500 nm.

In addition, the position control apparatus of an optical system according to the first aspect of the present invention preferably further comprises a moving means for moving an optical head carrying at least the optical system, the first actuator, and the second actuator in the radial direction of the optical storage medium.

In addition, a position control apparatus of an optical system according to a second aspect of the present invention comprises an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means, a first actuator for moving the holding means in the focus direction perpendicularly intersecting the storage surface of the optical storage medium, a second actuator for moving the holding means in the radial direction of the optical storage medium, a first control circuit for controlling the first actuator on the basis of electrostatic capacitance formed by the electrode and the optical storage medium and of a reflected light from the optical storage medium so that the distance between the solid immersion lens and the optical storage medium is within the region where the near-field is formed, and a second control circuit for controlling the second actuator on the basis of the reflected light from the optical storage medium.

In addition, in the position control apparatus of an optical system according to the second aspect of the present invention, preferably, the second control circuit controls the second actuator on the basis of the reflected light of the optical storage medium, so that tracking control is performed based on at least one of a guiding channel existing on said optical storage medium, an emboss pit and a storage mark.

In addition, in the position control apparatus of an optical system according to the second aspect of the present invention, preferably the second control circuit generates a tracking error signal using any method among a push-pull method, 3-spot method, differential push-pull method, and phase difference method and controls the second actuator on the basis of the tracking error signal.

In addition, a position control apparatus of an optical system according to a third aspect of the present invention comprises an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means, a first actuator for moving the holding means in the focus direction perpendicularly intersecting the storage surface of the optical storage medium, a second actuator for moving the holding means in the direction perpendicularly intersecting the signal storage direction on the optical storage medium, a first control circuit for controlling the first actuator on the basis of electrostatic capacitance formed by the electrode and the optical storage medium and of a reflected light from the optical storage medium so that the distance between the solid immersion lens and the optical storage medium is within the region where the near-field is formed, and a second control circuit for controlling the second actuator on the basis of the reflected light from the optical storage medium, a first moving means for moving an optical head carrying at least the optical system, the first actuator, and the second actuator in the direction perpendicularly intersecting the signal storage direction on the optical storage medium, and a second moving means for moving an optical head carrying at least the optical system, the first actuator, and the second actuator in the signal storage direction on the optical storage medium.

The functions of the position control apparatus of an optical system according to the third aspect of the preaent invention are as follows.

The function of position control of the holding means in the focus direction is the same as the case of the position control apparatus of an optical system in the first embodiment described previously.

In the present position control apparatus of an optical system, furthermore, the optical head can be moved by the first moving means and the second moving means in the direction perpendicularly intersecting the signal storage direction and in the signal storage direction. Therefore, it is possible to access the card shape storage surface of the storage medium.

In addition, a position control method of an optical system according to a fourth aspect of the present invention is a position control method of an optical system controlling the distance between an optical system which forms a near-field with an optical storage medium and irradiates a converging light beam to the optical storage medium and the optical storage madium by moving the optical system in the focus direction perpendicularly intersecting the storage surface of the optical storage medium, which method comprises a step of controlling an actuator for moving a holding means, fixing an objective lens converging the light beam to be irradiated to the optical storage medium and a solid immersion lens with an electrode formed on a surface facing the optical storage medium and irradiating the light beam converged by the objective lens to the optical storage medium, move in the focus direction on the basis of electrostatic capacitance formed by the electrode and the optical storage medium and of a reflected light from the optical storage medium so that the distance between the solid immersion lens and the optical storage medium is within the region where the near-field is formed.

In addition, a position control method of an optical system according to a second aspect of the present invention is a position control method of an optical system controlling the distance between an optical system which forms a near-field with an optical storage medium and irradiates a converging light beam to the optical storage medium and the optical storage medium by moving the optical system in the focus direction perpendicularly intersecting the storage surface of the optical storage medium, the method comprising the steps of controlling a first actuator for moving a holding means, fixing an objective lens converging the light beam to be irradiated to the optical storage.medium and a solid immersion lens with an electrode formed on a surface facing the optical storage medium and irradiating the light beam converged by the objective lens to the optical storage medium, move in the focus direction on the basis of electrostatic capacitance formed by the electrode and the optical storage medium and of a reflected light from the optical storage medium so that the distance between the solid immersion lens and the optical storage medium becomes within the region where the near-field is formed and controlling a second actuator and moving the holding means in the radial direction of the optical storage medium on the basis of a reflected light from the optical storage medium.

In addition, a position control method of an optical system according to a third aspect of the present invention comprises a position control method of an optical system controlling the distance between an optical system which forms a near-field with an optical storage medium and irradiates a converging light beam to the optical storage medium and the optical storage medium by moving the optical system in the focus direction perpendicularly intersecting the storage surface of the optical storage medium, the method comprising the steps of controlling a first actuator for moving a holding means, fixing an objective lens converging the light beam to be irradiated to the optical storage medium and a solid immersion lens with an electrode formed on a surface facing the optical storage medium and irradiating the light beam converged by the objective lens to the optical storage medium, move in the focus direction on the basis of electrostatic capacitance formed by the electrode and the optical storage medium and of a reflected light from the optical storage medium so that the distance between the solid immersion lens and the optical storage medium is within the region where the near-field is formed, moving an optical head carrying at least the optical system, the first actuator, and a second actuator in the direction perpendicularly intersecting the signal storage direction on the optical storage medium, and moving an optical head carrying at least the optical system, the first actuator, and the second actuator in the signal storage direction on the optical storage medium.

In addition, a storage and reproduction apparatus according to a first aspect of the present invention comprises a light source, an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means, an actuator for moving the holding means in the focus direction perpendicularly intersecting the storage surface of the optical storage medium, a control circuit for controlling the actuator on the basis of electrostatic capacitance formed by the electrode and the optical storage medium and of a reflected light from the optical storage medium so that the distance between the solid immersion lens and the optical storage medium is within the region where the near-field is formed, a motor for rotating the optical storage medium when storing information and reproducing information, an intensity modulation circuit for modulating the intensity of the light from the light source according to the information to be stored when storing information, and an information detection circuit for detecting the stored information from the reflected light reflected by the optical storage medium when reproducing information.

In addition, a storage and reproduction apparatus according to a second aspect of the present invention comprises light source, an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means, a first actuator for moving the holding means in the focus direction perpendicularly intersecting the storage surface of the optical storage medium, a second actuator for moving the holding means in the radial direction of the optical storage medium, a first control circuit for controlling the first actuator on the basis of electrostatic capacitance formed by the electrode and the optical storage medium and of a reflected light from the optical storage medium so that the distance between the solid immersion lens and the optical storage medium is within the region where the near-field is formed, a second control circuit for controlling the second actuator on the basis of the reflected light from the optical storage medium, a motor for rotating the optical storage medium when storing information and reproducing information, an intensity modulation circuit for modulating the intensity of the light from the light source according to the information to be stored when storing information, and an information detection circuit for detecting the stored information from the reflected light reflected by the optical storage medium when reproducing information.

In addition, a storage and reproduction apparatus according to a third aspect of the present invention comprises a light source, an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means, a first actuator for moving the holding means in the focus direction perpendicularly intersecting the storage surface of the optical storage medium, a second actuator for moving the holding means in the direction perpendicularly intersecting the signal storage direction on the optical storage medium, a first control circuit for controlling the first actuator on the basis of electrostatic capacitance formed by the electrode and the optical storage medium and of a reflected light from the optical storage medium so that the distance between the solid immersion lens and the optical storage medium is within the region where the near-field is formed, a second control circuit for controlling the second actuator on the basis of the reflected light from the optical storage medium, a first moving means for moving an optical head carrying at least the optical system, the first actuator and the second actuator in the direction perpendicularly intersecting the signal storage direction on the optical storage medium, a second moving means for moving an optical head carrying at least the optical system, the first actuator, and the second actuator in the signal storage direction on the optical storage medium, a motor for rotating the optical storage medium when storing information and reproducing information, an intensity modulation circuit for modulating the intensity of the light from the light source according to the information to be stored when storing information, and an information detection circuit for detecting the stored information from the reflected light reflected by the optical storage medium when reproducing information.

BRIEF DESCRIPTION OF THE DRAWINGS

These and other objects and features of the present invention will become clearer from the following description of the preferred embodiments given with reference to the accompanying drawings, in which:

Fig. 1 is a view of an example of the configuration of the optical head according to a first embodiment of the present invention;

Fig. 2 is a view of the positional relation of the lens holder and the tracking actuator as viewed along the direction indicated by the arrow A in Fig. 1;

Fig. 3 is a view of an example of the configuration of the solid immersion lens shown in Fig. 1;

Fig. 4 is a schematic view of the configuration of the optical disk drive device according to the first embodiment in the present invention;

Fig.5 is a view of examples of the correspondence between the air gap A, interval h, electrostatic Cg, and the oscillation frequency f;

Fig. 6 is a view of an example of the configuration of the optical pick-up according to the first embodiment of the present invention;

Fig. 7 is a view of the arrangement of the light receiving unit of the photodetector included in the optical pick-up shown in Fig. 6;

Fig. 8 is a schematic flow chart showing the operations of the optical disk drive device according to the first embodiment of the present invention;

Fig. 9 is a schematic flow chart following Fig. 8, showing the operations of the optical disk drive device according to the first embodiment of the present invention;

Fig. 10 is a schematic view of the configuration of the optical storage and reproduction apparatus according to the second embodiment of the present invention; and

Figs. 11A and 11B are views for explaining a near-field optical system using a solid immersion lens.

DESCRIPTION OF THE PREFERRED EMBODIMENTS

Below, embodiments of the present invention will be explained with reference to the attached drawings.

First Embodiment

[Optical Head]

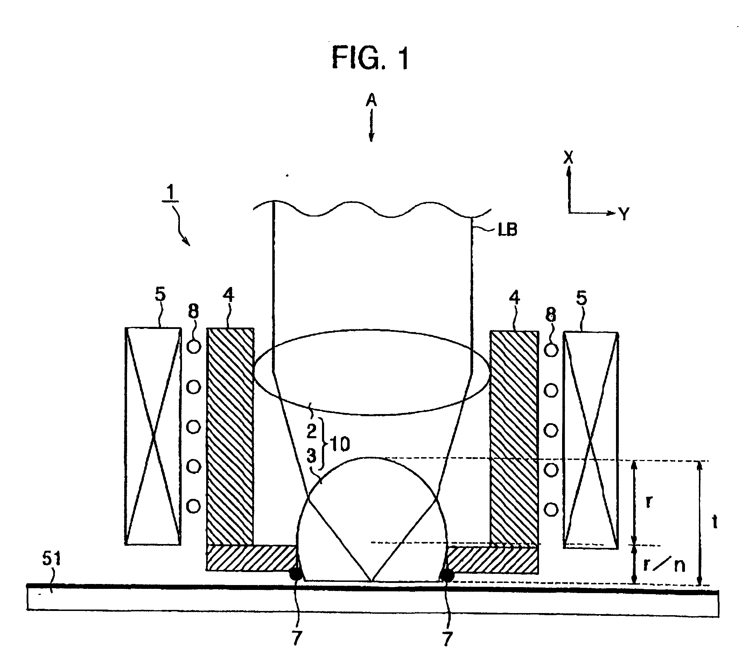

Figure 1 is a view of an example of the configuration of an optical head.

The optical head 1 is mounted on the optical pick-up of the aforesaid optical disk drive device.

The optical head 1 comprises an objective lens 2, a solid immersion lens 3, a lens holder 4, a tracking actuator 5, and a focus actuator 8.

Here, the objective lens 2 corresponds to the objective lens in the present invention, the solid immersion lens 3 corresponds to the solid immersion lens 3 in the present invention, the lens holder 4 corresponds to the holding means in the present invention, the tracking actuator 5 corresponds to the second actuator in claim 4, etc., and the focus actuator 8 corresponds to the actuator in claim 1 and the first actuator in claim 4 etc.

The objective lens 2 receives the laser beam LB from a semiconductor laser serving as a light source in the aforesaid optical pick-up, converges this laser beam LB, and supplies the same to the solid immersion lens 3.

The solid immersion lens 3 converges the laser beam LB passing through the objective lens 2 and supplies the same to an optical disk 51.

The optical disk 51 stores a string of signals along the circumferential direction of concentric circles with respect to the center of the optical disk 51 and arranged at specific intervals or in a spiral manner.

The solid immersion lens 3 is shaped by cutting part of a spherical lens and is generally referred to as a "super sphere SIL" or "hyper sphere SIL".

The solid immersion lens 3 is arranged so that the spherical surface faces the objective lens 3 and the surface opposite to the spherical surface (bottom surface) faces the optical disk S1.

The lens holder 4 holds the objective lens 2 and the solid immersion lens 3 integrally with a specific positional relation.

When a laser beam parallel with the optical axis strikes the objective lens 2, the solid immersion lens 3 converges the laser beam LB from the objective lens 2, allows the same to pass through the center portion of the bottom surface of the solid immersion lens 3, and emits the passed laser beam LB to the optical disk 51.

The objective lens 2 and the solid immersion lens 3 are arranged so that their optical axes coincide. The center portion is positioned on the optical axes.

The lens holder 4 includes conductive parts. As described later, on the bottom surface or the solid immersion lens 3, a conductive film is formed. The conductive film on the bottom film and the conductive parts of the lens holder 4 are electrically connected through solder 7.

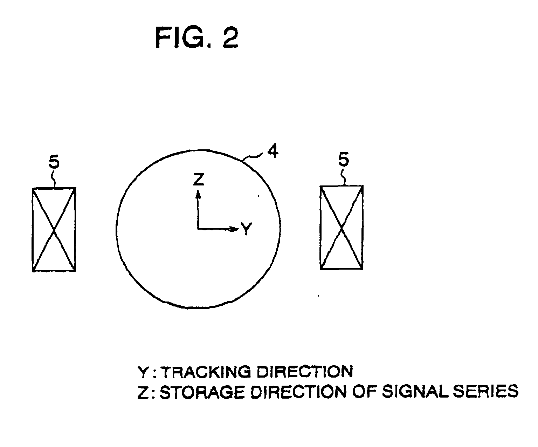

Figure 2 is a view of the positional relation of the lens holder 4 and the tracking actuator 5 as viewed along the direction indicated by the arrow A in Fig. 1.

The tracking actuator 5 moves the lens holder 4 in the Y-direction as shown in Fig. 1 and Fig. 2 (the tracking direction served by the radial direction of the storage surface of the optical disk 51) and holds the laser beam LB passing the solid immersion lens 3 at the center of the optical disk 51.

The distance of the movement of the lens holder 4 in the Y-direction due to the tracking actuator 5 is, for example, about $\pm 50$ μm. This is short comparing with the stroke of the lens holder in the Y-direction in a general optical disk drive device. In addition, in the optical head 1, by restraining the stroke of the spring holding the lens holder 4 and raising the mechanical strength, the inclination angle of the actuator arising during the movement of the lens holder 4 in the tracking direction is made small, and in the fine air gap state, it becomes possible to prevent the bottom surface of the solid immersion lens 3 from touching the optical disk 51.

In the present embodiment, positioning in the tracking direction (tracking control) is performed based on at least one of the guiding channel existing on the optical disk 51, an emboss pit and a storage mark.

The focus actuator 8 makes the lens holder 4 move in the X-direction (focus direction) serving as the direction of the optical axis that perpendicularly intersects the storage surface of the optical disk 51 and holds the solid immersion lens 3 and the optical disk 51 apart a specifio distance.

The solid immersion lens 3 is designed so as to converge the laser beam LB without aberration and fulfills the stigmatic focusing conditions. This solid immersion lens 3 condenses the laser beam LB from the objective lens 2 so that a focus is formed on the storage surface of the optical disk 51.

The thickness t of the solid immersion lens 3 in the direction of the optical axis is expressed by the. following equation (2) using the radius r of the spherical lens and the refractive index n.

$$t = r \times (1+1/n) \tag{2}$$

In addition, according to reference 2 mentioned previously, the numerical aperture $NA_{off}$ of the optical system 10 including the objective lens 2 and the solid immersion lens 3 is expressed by the following equation (3) using the numerical aperture $NA_{obj}$ and the refractive index n of the solid immersion lens 3.

$$NA_{off} = n^2 \times NA_{obj} \tag{3}$$

In the present embodiment, as an example, the numerical aperture of the objective lens 2 is set as $NA_{obj} = 0.45$, and the refractive index of the solid immersion lens 3 is set as n=1.83.

In this case, from the above equation (3), the numerical aperture of the optical system 10 bacomes $NA_{off} = 1.5$.

In addition, as an example, the wavelength A of the laser beam LB is set to be A=640nm. In order to form the near-field, the air gap A is set to be 0<A≤100 nm. Preferably, A is maintained to be A=50 nm.

[Solid Immersion Lens]

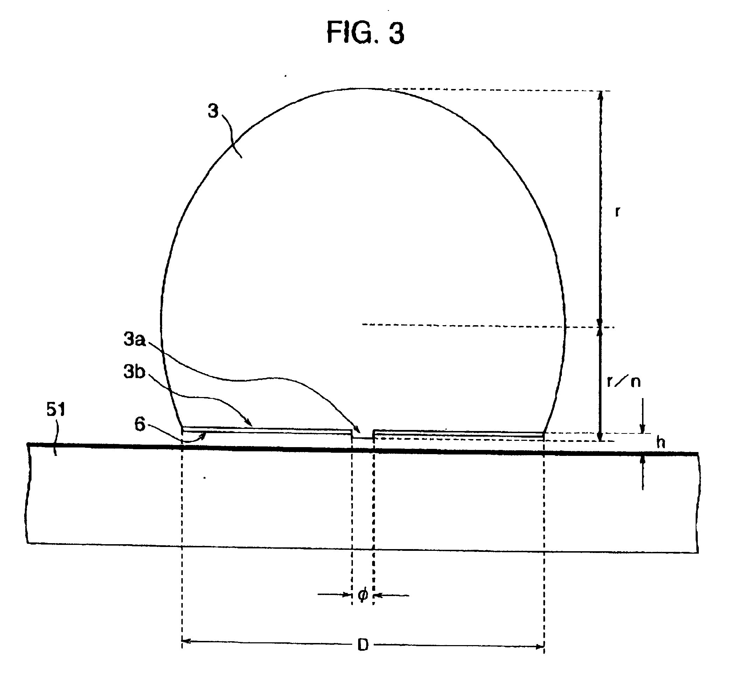

Figure 3 is a view of an example of the configuration of the solid immersion lens.

The surface of the solid immersion lens 3 facing the optical disk 51 (bottom surface) has a diameter D of 1.5 mm, has a projecting center portion 3a, and has a flat surrounding portion.

The projection at the center portion 3a is about 2 μm in height and has a diameter φ of about 40 μm.

The flat surface of the surrounding portion 3b is covered by a conductive film such as aluminum formed by deposition. The thickness of this conductive film is thinner than tha height of the projection portion (about 2 μm).

This conductive film 6 and the reflecting film (storage film) of aluminum etc. form electrostatic capacitance Cg depending on the interval between the flat surface of the solid immersion lens 3 and the optical disk 51.

The electrostatic eapacitance Cg is expressed by the following equation (4) using the facing area S of the surrounding portion 3b and the optical disk 51, and their interval h. Note that the thickness of the conductive film is assumed to be negligible comparing with the interval h.

$$Cg = \varepsilon_0 \text{ x } \varepsilon_r \text{ x } S/h \tag{4}$$

where, $\varepsilon_0$ is the dielectric constant in vacuum of a value of 8.854 x $10^{-12}$ F/m. $\varepsilon_r$ is the relative dielectric constant of a value of substantially 1 in air.

Because the diameter D of the bottom surface is equal to 1.5 mm, the facing area S becomes n x $(D/2)^2$ = 1.767 x $10^{-6}$ m2.

The interval h becomes a minimum of 2 $\mu$m when the projection at the center portion 3a is in contact with the optical disk 51, namely, when the distance (air gap) A between the optical system 10 and the optical disk 51 is 0 nm.

Therefore, from the equation (4) above, the electrostatic capacitance Cg is approximately 7.82 pF, 7.63 pF, 7.45 pF, and 7.11 pF as the air gap A is 0 nm, 50 nm, 100 nm, and 200 nm, respectively.

As shown here, because the electrostatic capacitance Cg changes depending on the air gap A, the air gap A can be determined using this electrostatic capacitance, and it is possible to render the air gap A within the range of the near-field by servo-control of the focus actuator 8 using the electrostatic capacitance Cg.

In addition, since the center portion 3a of the facing area of the solid immersion lens 3 is made to project and a conductive film 6 thinner than the height of the projection is formed on the surrounding portion 3b, it is possible to prevent the conductive film 6 from approaching the optical disk 51 more than the center portion 3a and touching the optical disk 51.

In addition, as shown in Fig. 1, since the conductive film 6 is electrically connected to the conductive lens holder 4 by solder 7, wiring connection to the conductive film 6 can be easily made through the lens holder 4.

[Optical Disk Drive Device]

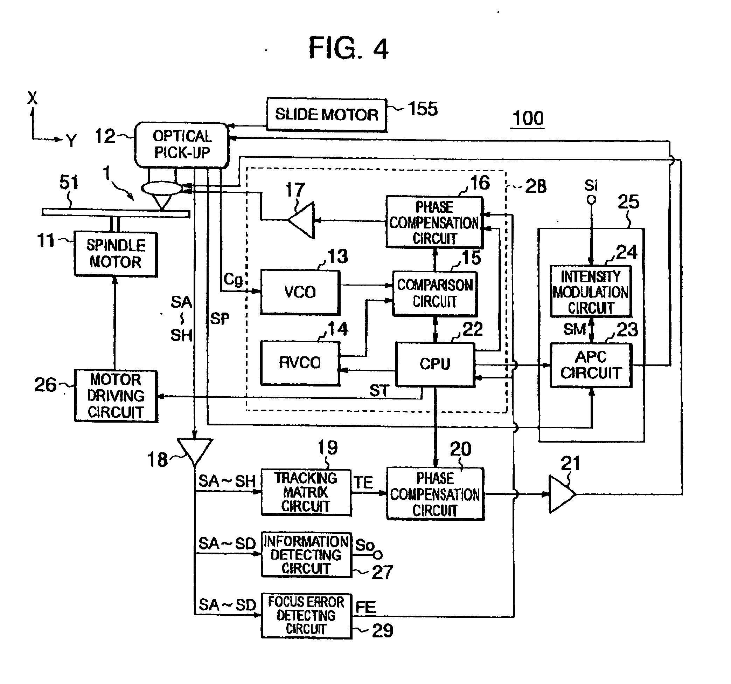

Figure 4 is a schematic view of the configuration of the optical disk drive device according to the present embodiment. In this optical disk drive device 100, the optical head 1 in Fig. 1 is mounted in the optical pick-up.

The optical disk drive device 100, as an example, is installed in a storage and reproduction apparatus that emits a laser beam from a semiconductor laser to the optical disk 51 via the optical system and stores and reproduces information.

The optical disk drive device 100 comprises an optical pick-up 12 wherein the optical head 1 is mounted, a spindle motor 11, a voltage controlled oscillator (VCO) 13, a reference voltage-controlled oscillator (RVCO) 14, a comparison circuit 15, phase compensation circuits 16 and 20, amplifying circuits 17, 18, and 21, a tracking matrix circuit 19, a central processing unit (CPU) 22, a semiconductor laser driving circuit 25, a motor driving circuit 26, an information detection circuit 27, a focus error detecting circuit 29, and a slide motor 155.

The semiconductor laser driving circuit 25 comprises an automatic power control (APC) circuit 23 and an intensity modulation circuit 24.

Here, the voltage control oscillator 13, the RVCO 14, the comparison circuit 15, the phase compensation circuits 16, and the central processing unit (CPU) 22 correspond to the control circuit and the first control circuit in the present invention.

In addition, the tracking matrix circuit 19 and the amplifying circuits 18 and 21 correspond to the second control circuit in the present invention.

In addition, the slide motor 155 corresponds to the moving means in claim 6 etc. in the present invention.

The optical disk drive device 100 emits a laser beam having a wavelength of 640 nm to the optical disk 51 using the optical head 1 and the optical pick-up 12 and stores and reproduces information.

Driven by the spindle motor, the optical disk 51 mounted in the optical disk drive device 100 rotates at a specific speed. This optical disk 51, as an example, stores information in a CAV (constant angular velocity) mode.

The signal processing system for focus servo is formed in the following way.

The VCO (voltage controlled oscillator) 13 comprises an LC oscillation circuit that has an inductor inside and a capacitor outside.

One electrode of the outside capacitor is the conductive film 6 formed on the flat surface of the solid immersion lens 3 of the optical head 1, the another electrode is the reflecting film or the storing film of the optical disk 51, and this capacitor has electrostatic capacitance Cg that depends on the interval h of the flat surface and the optical disk 51.

The oscillation frequency f of the VCO 13 is expressed by the following equation (5) using the electrostatic capacitance Cg of the outside capacitor, floating capacitance of the circuit Cf, and inductance L of the inside inductor.

$$f=1/[2\pi \text{ x } \{L \text{ x } (Cg+Cf)\}^{\frac{1}{2}}] \tag{5}$$

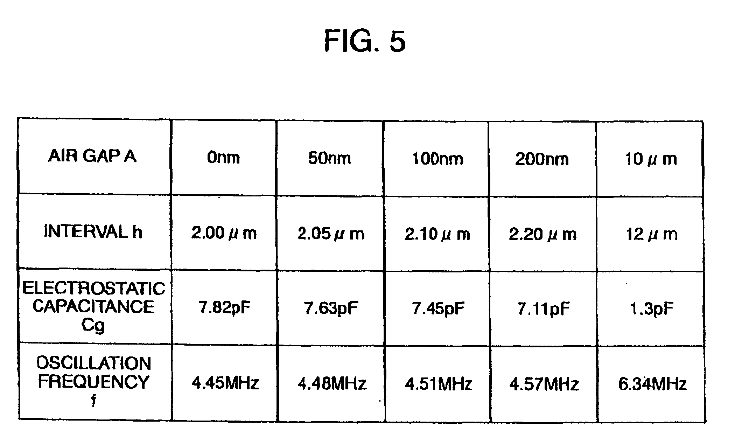

The correspondence between the air gap A, interval h, electrostatic Cg, and the oscillation frequency f is shown in Fig. 5. Here, as an example, it is set that the inductance L = 100 µH, and the floating capacitance Cf = 5 pF.

Namely, from the equation (5) above, the oscillation frequency f becomes 4.45 MHZ, 4.48 MHZ, 4.51 MHZ, 4.57 MHZ, and 6.34 MHZ, when the air gap A is 0 nm, 50 nm, 100 nm, 200 nm, and 10µm, respectively.

The voltage controlled oscillator (RVCO; reference voltage controlled oscillator) 14 generates a reference signal.

The frequency fr of the reference signal is for example 4.51 MHZ. This frequency is equal to the oscillation frequency of the VCO 13 when the air gap A = 100 nm.

Further, the RVCO 14 for example has a varactor diode. By controlling the voltage applied to the varactor diode from the CPU 22, the frequency of the reference signal is able to be set.

The comparison circuit 15 is supplied with the output signal having a frequency f from VCO 13 and the output signal having a frequency fr from RVCO 14.

The comparison circuit 15 compares the frequency and phase of the output signal from VCO 13 with the frequency and phase of the output signal from RVCO 14 and generates a signal (error signal) according to the differences of both frequency and phase.

The phase compensation circuit 16 is supplied with the output signal from the comparison circuit 15 and the focus error signal FE, generates the compensated signal with the output signal from the comparison circuit 15 or the focus error signal FE compensated (phase compensation and/or frequency compensation), and supplies the same to the amplifying circuit 17.

The amplifying circuit 17 amplifies the compensated signal and supplies the same to the focusing actuator 8 as a control signal for adjusting the air gap A.

The focus actuator 8 is an electromagnetic actuator that makes the lens holder 4 move in the focus direction based on the control signal from the amplifying circuit 17. It adjusts the air gap A from the outside to the inside of the region where the near-field is formed and further maintains the air gap A within this region.

In this way, the air gap A is maintained at 0<A≤100 nm, A is adjusted to about 50 nm, the interval h is adjusted to 2.05 µm, and focus servo is achieved.

The central processing unit (CPU) 22 is the controller that governs the control of the overall optical disk drive device 100 and for example is comprised of a one-chip microcomputer.

The CPU 22 is supplied with the output signal from the comparison circuit 15 and the focus error signal FE and detects if the air gap A is maintained within the range of the near-field (the region where the near-field is formed) on the basis of the output signal of the comparison circuit 15 or the focus error signal FE or if the air gap A has the desired value.

In addition, the CPU 22 generates a start signal ST and supplies this start signal ST to the motor driving circuit 26. The CPU 22 is supplied with the signal representing the revolutions or speed of the spindle motor 11 or the optical disk 51.

The tracking servo and the focus servo are performed under the control of the CPU 22.

The control circuit 28 is formed by the CPU 22, VCO 13, RVCO 14, comparison circuit 15, phase compensation circuit 16, and amplifying circuit 17.

The control circuit 28 has a function of controlling the focus actuator 8 so that the air gap A is within the range of the near-field (for example, 0<A≤50 nm, preferably, 0<A≤200 nm, more preferably, 0<A≤100 nm).

By making the air gap A within the range of the near-field, it is possible to maintain the beam intensity at the center of the beam spot on the storage surface of the optical disk 51 to be for example above 50% (preferably above 60%) when the air gap A = 0 nm. As an example, by adjusting the air gap A to about 50 nm, about 80% of the beam intensity is achievable.

The motor driving circuit 26 supplies electric power to the spindle motor 11 and rotates it at a specific speed. For example, the rotation control may be performed by PWM (pulse width modulation) control etc.

When supplied with the start signal ST from the CPU 22, the motor driving circuit 26 starts the rotation of the spindle motor 11.

A not shown turntable is mounted on the shaft of the spindle motor 11. Along with the rotation of the spindle motor 11, the optical disk 51 on the turntable turns.

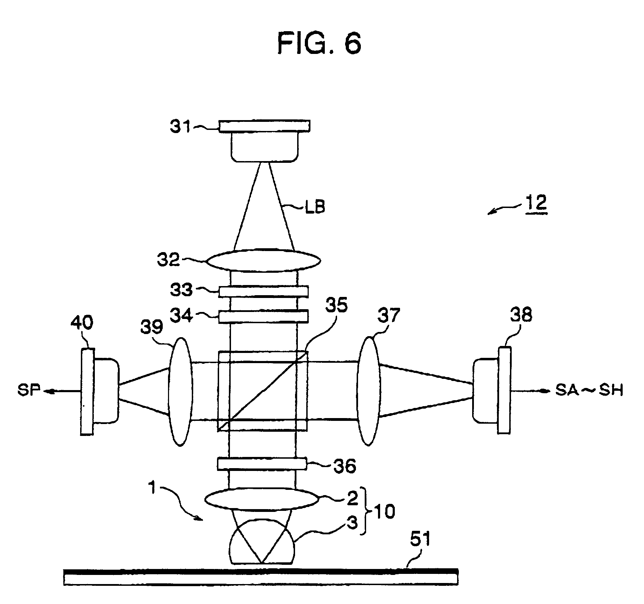

Figure 6 is a view of an example of the configuration of the optical pick-up 12.

The optical pick-up 12 comprises a semiconductor laser 31, collimator lens 32, a diffraction grating 33, a ½ wave plate 34, a polarizing beam splitter 35, a 1/4 wave plate 36, condenser lenses 37 and 39, photodetectors 38 and 40, an objective lens 2, and a solid immersion lens 3.

An optical head 1 is mounted in the optical pick-up 12. The optical head 1 comprises the optical system 10 including the objective lens 2 and the solid immersion lens 3.

The semiconductor laser 31 is an example of a light source or light-emitting element that emits coherent light. The semiconductor laser 31 produces a linearly polarized laser beam LB that has a wavelength of 640 nm and supplies it to the collimator lens 32.

The collimator lens 32 makes the laser beam LB from the semiconductor laser 31 into a parallel beam and supplies it to the diffraction grating 33.

The diffraction grating 33 splits the laser beam LB from the collimator lens 32 into a main beam (the zero-th diffracted light) and a sub beam (the first diffracted light) and supplies the main beam and the sub beam to the ½ wave plate 34.

The ½ wave plate 34 rotates the polarization plane of the main beam and sub beam from the diffraction grating 33 and supplies them to the polarization beam splitter 35.

The polarization beam splitter 35 passes a large part of the incident laser beam from the ½ wave plate 34 and supplies it to the 1/4 wave plate 36 and reflects part of the incident laser beam and supplies it to the condenser lens 39.

The condenser lens 39 converges the reflected laser beam from the polarization beam splitter 35 and supplies it to the photodetector 40.

The photodetector 40 photoelectrically converts the laser beam from the condansar lens 39 and produces a signal SP according to the intensity of the laser beam. The photodetector 40 is utilized to monitor the emission intensity of the semiconductor laser 31 or to monitor the beam intensity on the storage surface (storage film) of the optical disk 51.

Furthermore, the intensity of the laser beam to the photodetector 40 is adjustable by rotating the ½ wave plate 34.

The 1/4 wave plate 36 rotates the polarization plane of the laser beam passing through the polarization beam splitter 35 to turn it into a circular polarization light and supplies the circular polarization laser beam to the objective lens 2 of the optical head 1.

The objective lens 2 converges the leaser beam from the 1/4 wave plate 36 and supplies it to the solid immersion lens 3.

The solid immersion lens 3 converges the laser beam from the objective lens 3, passes it through the center portion 3a, and supplies the passed laser beam to the signal storage surface of the optical disk 51.

The laser beam reflected on the signal storage surface (storage film) of the optical disk 51 passes through the solid immersion lens 3 and the objective lens 2 and is supplied to the 1/4 wave plate 36.

The 1/4 wave plate 36 rotates the polarization plane of the laser beam from the objective lens 2 to turn it into a linear polarization light and supplies the linear polarization laser beam to the polarization beam splitter 35.

Note that the polarization plane of the incident laser beam supplied to the 1/4 wave plate from the polarization beam splitter 35 is perpendicular to the polarization plane of the reflected laser beam supplied to the polarization beam splitter 35 from the 1/4 wave plate.

The polarization beam splitter 35 reflects part of the laser beam from the 1/4 wave plate 36 and supplies it to the condenser lens 37.

The condenser lens 37 converges the reflected laser beam from the polarization beam splitter 35 and supplies it to the photodetector 38.

The photodetector 38 photoelectrically converts the laser beam from the condenser lens 37 to produce signals SA to SH. The photodetector 38 is utilized to detect the tracking error signal TE and the reproduction RF signal.

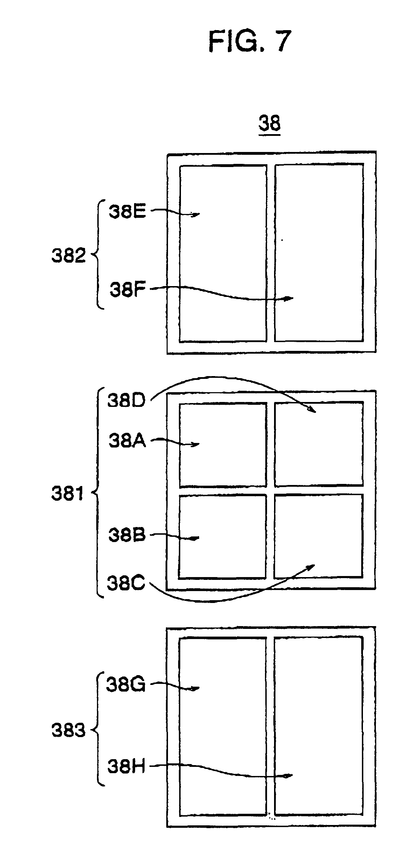

The photodetector 38, as shown in Fig. 7, is provided with a first light-receiving unit 381 arranged at the center for receiving the main light beam and second and third light receiving units 382 and 383 for receiving the sub light beam arranged on the two aides of the first light-receiving unit 381.

The first light receiving unit 381 is equally divided into four light receiving parts 38A to 38D.

The second light receiving unit 382 is equally divided into two light receiving parts 38E to 38F.

The third light receiving unit 383 is equally divided into two light receiving parts 38G to 38H.

The photodetector 38 may be formed by a light receiving element with the light receiving unit divided into eight parts.

The output signals SA to SH from the light receiving parts 38A to 38H of the photodetector 38 are amplified by the amplifying circuit (head amplifier) 18 in Fig. 4 and are supplied to the tracking matrix circuit (tracking error detection circuit) 19 and the information detection circuit 27.

Based on the output signals SA to SH, the tracking matrix circuit 19 does calculations of tha following equation (6) and generates a tracking error signal (tracking error signal) TE using the differential push-pull method. Note that k in the equation is a constant.

$$TE=(SA+SD)-(SB+SC)+k \times \{(SE-SF)+(SG-SH)\} \tag{6}$$

In the tracking matrix circuit 19, a tracking error signal TE is generated so that appropriate tracking is performed with respect to the emboss-pits, or the storage marks formed on the storage surface of the optical disk 51.

The phase compensation circuit 20 is supplied with the tracking error signal TE, generates a compensated signal with the tracking error signal TE compensated in phase, and supplies it to the amplifying circuit 21.

The amplifying circuit 21 amplifies the compensated signal and supplies it to the tracking actuator 5 as a control signal.

The tracking actuator 5 is an electromagnetic actuator which makes the lens holder 4 move in the radial direction of the optical disk 51 (or the tracking direction) based on the control signal from the amplifying circuit. As a result, tracking servo is achieved.

Based on the output signals SA to SH amplified by the amplifying circuit (head amplifier) 18, the information detection circuit 27 calculates the following equation (7) to generate the reproduction RF signal RF. After that, based on the reproduction signal RF, demodulation is performed and the stored information S0 on the optical disk 51 reproduced.

$$RF=SA+SB+SC+SD \tag{7}$$

Based on the output signal SA to SD amplified by the amplifying circuit (head amplifier) 18, the focus error detecting circuit 29 calculates the following equation (8) to generate a focus error signal FE by the astigmatism method. After that, the focus error signal FE is supplied to the phase compensation circuit 16 and the CPU 22.

$$FE=SA-SB+SC-SD \tag{8}$$

The semiconductor laser driving circuit 25 comprises an intensity modulation circuit 24 and APC circuit 23 and drives the semiconductor laser 31 in the optical pick-up 12.

The intensity modulation circuit 24 is supplied with the information Si to be stored in the optical disk 51 from a memory or a device outside and generates a modulation control signal SM according to the input information Si.

The APC (automatic power control) circuit 23 is supplied with the output signal of the photodetector 40 for the motor inside the optical pick-up 12 and the modulation control signal SM.

When storing information, based on the modulation control signal SM, the APC circuit 23 changes the driving voltage or the driving current of the semiconductor laser 31 and modulates the intensity of the laser beam LB. In addition, based on the output signal SP of the photodetector 49, the emission intensity of the semiconductor laser 31 is maintained in a first setting range R1, and the output of the laser light of the semiconductor 31 is adjusted.

On the other hand, when reproducing infonation, based on the output signal SP of the photodetector 40, the APC circuit 23 maintains the emission intensity of the semiconductor laser 31 in a second setting range R2 (<R1) and adjusts the output of the laser light of the semiconductor laser 31.

Further, based on the control signal from a not shown host CPU, the slide motor 155 moves the optical pick-up 12 in the tracking direction.

In the following, examples of operations of the optical disk drive device 100 are explained.

[Example of Operation of Focus Control]

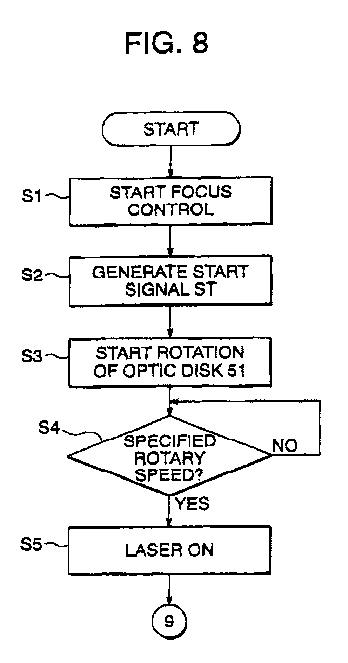

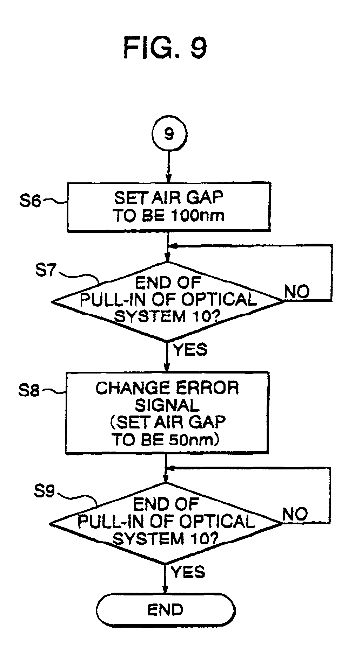

Figure 8 and Fig. 9 are schematic flow charts showing the operations of the optical disk drive device 100.

First, at step S1, the CPU 22 detects the command for starting focus servo. For example, the starting command is supplied to the CPU 22 after an operator performs switch operations for storage and reproduction with respect to the storage and reproduction apparatus including the optical disk drive device 100.

At step S2, the CPU 22 generates the start signal ST and supplies it to the motor driving circuit 26.

Based on the start signal ST, at step S3, the motor driving circuit 26 starts to supply electric power to the spindle motor 11 and start to rotate the optical disk 51.

At step S4, the CPU 22 judges if the speed of the optical disk 51 (disk rotary speed) V is the predetermined specific speed Vc (>0).

If the disk speed is not the specific speed Vc, the CPU 22 adjusts the rotation of the spindle motor 11 to the specific speed by means of the motor driving circuit 26.

If the disk speed is the specific speed Vc, the routine proceeds to the next step.

At step S5, the CPU 22 supplies a POWER ON signal to the APC circuit 23 on the semiconductor driving circuit 2S. Based on the POWER ON signal, the APC circuit 23 activates the semiconductor laser 31 to output a laser beam LB.

At step S6, the CPU 22 sets the oscillation frequency fr of the RVCO 14 to about 4.5 MHZ and sets the target value of the air gap A to 100 nm, that is, the intermediate target value produced by the focus error signal FE. Then, driving of the focus actuator 8 is started, and the solid immersion lens 3 (and the optical system 10 as well) is initiated to be pulled in (focus pull-in).

The oscillation frequency fr=4.51 MHZ, as shown in Fig. 5, is equal to the oscillation frequency f of the VCO 13 with the air gap A - 100 nm.

At step S7, based on the output signal of the comparison circuit 15, the CPU 22 judges whether the pull-in operation for setting the air gap A to 100 nm or substantially 100 nm is finished or not,

If the pull-in is not finished, the routine waits until the end.

If the pull-in is finished, the air gap A is maintained at the intermediate target value (100 nm) or substantially the intermediate target value, then the routine proceeds to the next step.

AT step S8, the CPU 22 substitutes the focus error signal FE for the output signal of the comparison circuit 15 as the signal to be compensated by the phase compensated circuit 16 (error signal). At this time, the focus error signal FE is set beforehand so that FE=0 when the air gap A = 50 nm.

Then, further pull-in (focus pull-in) of the solid immersion lens 3 (and the optical system 10 as well) is performed by the focus actuator 8.

At step S9, based on the focus error signal FE, the CPU 22 judges whether the pull-in operation for setting the air gap A to 50 nm or substantially 50 nm is finished or not.

If the pull-in is not finished, the routine waits until the end.

If the pull-in is finished, the processing in the flow chart ends. At this time, the air gap A is maintained to the final target value (50 nm) or substantially the final target value and is maintained within the range of the near-field.

If the semiconductor laser 31 is activated while the optical disk 51 is at rest, a specific location of the optical disk 51 may be irradiated by the laser beam for a long time causing the irradiated location to become a high temperature. The characteristics of the irradiated location may then change.

[Examples of Tracking Control Operation]

The output signals SA to SH of the light receiving parts 38A to 38H of the light receiving unit 38 as shown in Fig. 7 are amplified by the amplifying circuit (head amplifier) 18 in Fig. 4 and are supplied to the tracking matrix circuit (tracking error detecting circuit) 19.

The tracking matrix circuit 19, based on the amplified output signals SA to SH, calculates equation (6) to generate a tracking error signal TE using the differential push-pull method. The tracking error signal TE is output to the phase compensation circuit 20.

The phase compensation circuit 20 performs phase compensation for the tracking error signal TE to generate a compensated signal and supplies it to the amplifying circuit 21.

The amplifying circuit 21 amplifies the compensated signal and supplies it to the tracking actuator 5 as a control signal.

The tracking actuator 5, based on the control signal from the amplifying circuit 21, moves the lens holder 4 in the radial direction of the optical disk 51 (or the tracking direction). As a result, tracking servo is achieved.

As described above, according to the optical disk drive device 100, a numerical aperture exceeding 1 is achievable by utilizing the solid immersion lens 3. Control for setting the air gap A to be a specific value within the range of the near-field (for example about 50 nm) can be achieved on the basis of the electrostatic capacitance Cg and the reflected light (reflected laser). Note that the numerical aperture of the optical system 10, for example, may be greater than 1 and no more than 3, or greater than 1 and no more than 2.5.

In addition, in the optical head 1, as shown in Fig. 1, the objective lens 2 and solid immersion lens 3 are fixed to the lens holder 4, so the objective lens 2 and the lens holder 4 are integral with the lens holder 4 and are driven to move in the X-direction by the focus actuator 8.

Consequently, according to the optical head 1, compared with the optical head in the aforesaid Japanese Unexamined Patent Publication (Kokai) No. 8-212579, the number of actuators can be reduced, the interference between actuators can be suppressed, the accuracy of control can be improved, and the processing of control can be simplified. Furthermore, according to the optical head 1, compared with the optical head in this disclosure, an optical head of reduced weight and size is achievable.

In addition, according to the optical head 1, by controlling the tracking actuator 5 on the basis of the tracking error signal TE from the tracking matrix circuit 19, the lens holder 4 can be driven to move in the Y-direction.

In addition, according to the optical head 1, because the conductive film 6 is formed on the bottom surface of the solid immersion lens 3, the electrostatic capacitance Cg can be made large by decreasing the interval between the conductive film 6 and the optical disk 51, and it is possible to perform the focus servo at high precision.

Furthermore, the control circuit 28 may control the focus actuator 8 so that the air gap A is set short by a number of steps from the outside to the inside of the region of the near-field. Due to this, the air gap A is made shorter gradually, so contact of the optical system 10 and the optical disk 51 is preventable. Even if they contact each other, the shock can be suppressed small.

The air gap A may be brought close to the final target value gradually by setting a number of intermediate target values in the interval from an initial value outside the region of the near-field to the final target value within the range of the near-field and going through these intermediate target values in order. For example, a number of intermediate target values may be set in the range in which the electrostatic Cg is substantially formed (as an example, from about 100 nm to about 100 μm).

Second Embodiment

The optical disk apparatus in the present embodiment is characterized by performing read and write operations of the optical card 51a, by including a Z-direction moving motor 150 for moving the optical pick-up 12 in the Z-direction, that is, the direction in which a signal string is stored on the storage surface of the optical card 51a (direction perpendicular with the tracking direction Y), and by moving the optical pick-up 12 in the Z-direction,
**[0188]** The optical disk apparatus in the present embodiment, as in the first embodiment, includes a Y-direction moving motor for moving the optical pick-up 12 in the tracking direction.
The configuration of the optical head 1 shown in Fig. 1 is in the same way applicable to the optical head in the present embodiment.

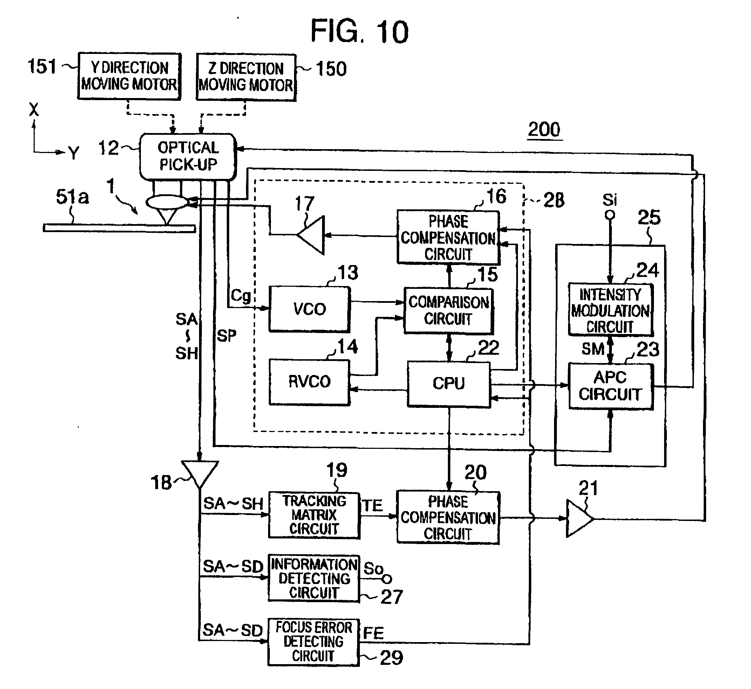

Figure 10 is a schematic view of the configuration of the optical storage and reproduction apparatus 200 in the present embodiment. In this optical storage and reproduction apparatus 200, the optical head 1 shown in Fig. 1 is mounted in the optical pick-up.
In Fig. 10, components having the same reference numerals as in Fig. 4 are the same as those components explained in the first embodiment described previously.
As shown in Fig. 10, the optical storage and reproduction apparatus 200 comprises an optical pick-up 12 wherein the optical head 1 is mounted, a voltage controlled oscillator (VCO) 13, a reference voltage controlled oscillator (RVCO) 14, a comparison circuit 15, phase compensation circuits 16 and 20, amplifying circuits 17, 18, and 21, a tracking matrix circuit 19, a central processing unit (CPU) 22, a semiconductor laser driving circuit 25, a motor driving circuit 26, an information detection circuit 27, a focus error detecting circuit 29, a Z-direction moving motor 150, and a Y-direction moving motor 151.
The semiconductor laser driving circuit 25 comprises an automatic power control (APC) circuit 23 and an intensity modulation circuit 24.
That is, the optical storage and reproduction apparatus 200 is formed by removing the spindle motor 11 and the motor driving circuit 26 from the optical disk drive device 100 shown in Fig. 4 and providing the Z-direction moving motor 150 and Y-direction moving motor 151 to replace the slide motor 152.
Here, the focus actuator 8 shown in Fig. 1 corresponds to the first actuator in claim 10, the tracking actuator 5 corresponds to the second actuator in claim 10, the Z-direction moving motor 150 corresponds to the second moving means in claim 10, and the Y-direction moving motor 151 corresponds to the first moving means in claim 10.
The Z-direction moving motor 150 and Y-direction moving motor 151, for example, are operated based on a control signal from a not shown host CPU.
As described above, according to the optical storage and reproduction apparatus 200, operations of reading and writing the entire storage surface of the optical card 51a become possible by moving the optical pick-up 12 in both the Z-direction and Y-direction using the Z-direction moving motor 150 and Y-direction moving motor 151.
The present invention is not limited to the above embodiments.
In the above embodiments, the optical system 10 is formed from the objective lens 2 and the solid immersion lens 3. An optical system 10 having a numerical aperture of about 1.5 is provided in the optical head 1.
However, an optical system comprising a single optical element in which the objective lens 2 and the solid immersion lens 3 are made into one unit may also be provided in the optical head 1.
As such a single optical element, for example, use may be made of the reflection type light condenser element disclosed in Chul Woo Lee, Kun Ho Cho, Chong Sam Chung, Jang Hoon Yoo, and Yong Hoon Lee, "Feasibility study on near field optical memory using a catadioptric optical system", Digest of *Optical* Data Storage, pp.137-139, Aspen, CO. (1998).
In addition, as optical elements having the functions of the objective lens 2 and the optical elements having functions of the solid immersion lens 3, three or more optical elements may be provided in the optical head 1. A hologram element may also be provided in the optical head 1.
In addition, in the above embodiments, as the tracking error signal TE, utilization of the differential push-pull method is taken as an example. In addition to that, by properly setting the number and arrangement of light receiving elements, it is possible to use optical error signals generated by means of the 1-spot push-pull method, 3-spot method, phase difference method, etc.
In addition, in the above embodiment, the case is illustrated of realizing near-field optical storage or near-field optical reproduction with respect to a rotary disk shaped information storage medium, but for example the same method is applicable to the case of, for example, storing information in a card shaped information storage medium or a solid (bulk) information storage medium or reading information from a card shaped information storage medium or a solid information storage medium.

In such an information storage medium, along with the interval between the near-field optical head and the storage medium being kept to a small distance not greater than 100 nm, the optical head needs to scan the information storage medium in two dimensions, while precise track control is performed.

Employing the distance control method by determining the electrostatic capacitance as described above and the track control method by using two-axis and three-axis actuators, the floating height can be controlled precisely and highly accurate tracking control can be performed, even when scanning the information storage medium in two dimensions.

In the present embodiment, the phase-varying type optical disk 51 is used as an example of the optical storage medium, but an optomagnetic disk may also be used.

Furthermore, even when employing a passive optical header using a levitating slider, it is possible to determine the floating height corresponding to the air gap A and optimize the floating height from the electrostatic capacitance and the reflected light.

Furthermore, the radius of the facing surface of the solid immersion lens 3 (or the optical system 10), on which the conductive film 6 is formed, is set to be a positive value smaller than the width from the inner edge of the storage surface of the optical disk 51 to the innermost track and preferably to a positive value smaller than the width from the outer edge of the storage surface of the optical disk 51 to the outermost track.

By doing this, when a laser beam is condensed to the innermost track or a laser beam is condensed to the outermost track, the entire area of the bottom surface of the solid immersion lens 3 can be made to face the storage surface, and it is possible to reduce the variation of the electrostatic capacitance due to the condensing position.

In the above embodiments, the optical disk drive device 100 is explained as an example of a position control apparatus of an optical system.

The position control apparatus of an optical system related to the present embodiment is usable under the conditions that the coherence of the light source is high and the working distance of the optical system (or the objective lens) is small, namely in an optical apparatus in which interference fringes occur easily.

In such an optical apparatus, in the optical disk drive device 100, by combining the focus control using the output signal (electric signal) of the LC oscillation circuit and the focus control using the reflected light, it is possible to reduce the error.

In addition to the storage and reproduction apparatus, the optical disk drive device may also be applied to various light irradiation apparatuses that irradiate light, for example, may be applied to processing apparatuses, exposure apparatuses, and inspection apparatuses.

For example, when inspecting samples of metal, semiconductor wafers, etc. using an optical inspection apparatus, it is possible to perform focus control based on the electrostatic capacitance between the optical system 10 and the sample and the reflected light as well. Of course, an optical storage medium may also be used as a sample.

When it is necessary to inspect the entire region of the sample swiftly, as an inspection apparatus for a semiconductor wafer by focus control based on the electrostatic capacitance between the optical system 10 and the sample and the reflected light, it is possible to position correction for the optical syetem according to the inclination of the movable stage or the sample, and the time needed for inspection may be shortened.

In the optical disk drive device 100, the configuration is made so that CPU 22 exchanges the output signal of the comparison circuit 15 and the error signals FE at specific values of the air gap A, but the configuration may also be made so that the output signal of the comparison circuit 15 and the error signal FE are summed at specific values of the air gap A.

Note that the above embodiments are examples of the present invention. The present invention is not limited to the above embodiments.

Summarizing the effects of the invention, as described above, according to the present invention, by fixing the objective lens and solid immersion lens to the holding means, focus control is enabled with a single actuator.

Consequently, the number of the actuators can be reduced comparing with the relsted art. As a result, an optical head of reduced weight and size is achievable, interference between actuators can be eliminated, and accuracy of positioning can be improved.

In addition, according to the present invention, by providing the second actuator for moving the lens in the tracking direction, the lens can also be moved in the tracking direction when the near-field is used.

In addition, according to the present invention, by providing the first moving means and the second moving means for moving the optical head in the tracking direction and in the storage direction of the signal series, converged light can also be irradiated on the storage surface of an optical storage medium in the shape of a card when the near-field is used.

**Claims**

1.  A position control apparatus of an optical system comprising

    an optical system forming a near-field with an optical storage medium and irradiating a converging light beam to the optical storage medium, wherein an objective lens converging the light beam to be irradiated on the optical storage medium and a solid immersion lens with an electrode formed on a surface facing the optical storage medium and irradiating the light beam converged by the objective lens to the optical storage medium are fixed by a holding means,
    an actuator for moving the holding means in the focus direction perpendicularly intersecting the storage surface of the optical storage medium, and
    a control-circuit for controlling the actuator on the basis of electrostatic capacitance formed by the electrode and the optical storage medium and of a reflected light from the optical storage medium so that the distance between the solid immersion lens and the optical storage medium becomes within the region where the near-field is formed.

2.  A position control apparatus of an optical system as set forth in claim 1, wherein

    said control circuit controls said actuator on the basis of said electrostatic capacitance until the distance between said solid immersion lens and said optical storage medium becomes a target value, and
    controls said actuator on the basis of the reflecting light from said optical storage medium after the target value is reached.

3.  A position control apparatus of an optical system as set forth in claim 1, wherein

    the numerical aperture of said optical system is greater than 1 and not greater than 3, and
    the region where said near-field is formed is in a contactless state with said optical system and said optical storage medium, and said distance is in the range no more than 500 nm.

4.  A position control apparatus of an optical system comprising

    an optical system forming a near-field with an optical storage medium and irradiating a converging light beam to the optical storage medium, wherein an objective lens converging the light beam to be irradiated on the optical storage medium and a solid immersion lens with an electrode formed on a surface facing the optical storage medium and irradiating the light beam converged by the objective lens to the optical storage medium are fixed by a holding means,
    a first actuator for moving the holding means in a focus direction perpendicularly intersecting the storage surface of the optical storage medium,
    a second actuator for moving the holding means in a radial direction of the optical storage medium,
    a first control circuit for controlling the first actuator on the basis of electrostatic capacitance formed by the electrode and the optical storage medium and of a reflected light from the optical storage medium so that the distance between the solid immersion lens and the optical storage medium becomes within the region where the near-field is formed, and
    a second control circuit for controlling the second actuator on the basis of the reflected light from the optical storage medium.

5.  A position control apparatus of an optical system as set forth in claim 4, wherein

    said first control circuit controls said first actuator on the basis of said electrostatic capacitance until the distance between said solid immersion lens and said optical storage medium becomes a target value, and
    said second control circuit controls said second actuator on the basis of the reflecting light from said optical storage medium after the target value is reached.

6.  A position control apparatus of an optical system as set forth in claim 4, further comprising a moving means for moving an optical head carrying at least said optical system, said first actuator, and said second actuator in the radial direction of said optical storage medium.

7.  A position control apparatus of an optical system as set forth in claim 4, wherein said second control circuit controls said second actuator on the basis of the reflected light of said optical storage medium, so that tracking control is performed based on at least one of a guiding channel existing on said optical storage medium, an emboss pit and a storage mark.

8.  A position control apparatus of an optical system as set forth in claim 4, wherein said second control circuit generates a tracking error signal using any method among a push-pull method, 3-spot method, differential push-pull method, and phase difference method and controls said second actuator on the basis of the tracking error signal.

9.  A position control apparatus of an optical system as set forth in claim 4, wherein

the numerical aperture of said optical system is not less than 1, and
the region where said near-field is formed is in a contactless state with said optical system and said optical storage medium, and said distance is in the range no more than 500 nm.

10. A position control apparatus of an optical system comprising

an optical system forming a near-field with an optical storage medium and irradiating a converging light beam to the optical storage medium, wherein an objective lens converging the light beam to be irradiated on the optical storage medium and a solid immersion lens with an electrode formed on a surface facing the optical storage medium and irradiating the light beam converged by the objective lens to the optical storage medium are fixed by a holding means,
a first actuator for moving the holding means in the focus direction perpendicularly intersecting the storage surface of the optical storage medium,
a second actuator for moving the holding means in the direction perpendicularly intersecting the signal storage direction on the optical storage medium,
a first control circuit for controlling the first actuator on the basis of electrostatic capacitance formed by the electrode and the optical storage medium and of a reflected light from the optical storage medium so that the distance between the solid immersion lens and the optical storage medium is within the region where the near-field is formed, and
a second control circuit for controlling the second actuator on the basis of the reflected light from the optical storage medium,
a first moving means for moving an optical head carrying at least the optical system, the first actuator, and the second actuator in the direction perpendicularly intersecting the signal storage direction on the optical storage medium, and
a second moving means for moving an optical head carrying at least the optical system, the first actuator, and the second actuator in the signal storage direction on the optical storage medium.

11. A position control apparatus of an optical system as set forth in claim 10, wherein

said first control circuit controls said first actuator on the basis of said electrostatic capacitance until the distance between said solid immersion lens and said optical storage medium becomes a target value, and
said second control circuit controls said second actuator on the basis of the reflecting light from said optical storage medium after the target value is reached.

12. A position control apparatus of an optical system as set forth in claim 10, wherein said second control circuit controls said second actuator on the basis of the reflected light of said optical storage medium, so that tracking control is performed based on at least one of a guiding channel existing on said optical storage medium, an emboss pit and a storage mark.

13. A position control apparatus of an optical system as set forth in olaim 12, wherein said second control circuit generates a tracking error signal using any method among a push-pull method, 3-spot method, differential push-pull method, and phase difference method and controls said second actuator on the basis of the tracking error signal.

14. A position control apparatus of an optical system as set forth in claim 10, wherein

the numerical aperture of said optical system is not less than 1, and
the region where said near-field is formed is in a contactless state with said optical system and said optical storage medium, and said distance is in the range no more than 500 nm.

15. A position control method of an optical system for controlling a distance with an optical system which forms a near-field with an optical storage medium and irradiates a converging light beam to the optical storage medium and the optical storage medium by moving the optical system in the focus direction perpendicularly intersecting the storage surface of the optical storage medium, said method comprising a step of

controlling an actuator for moving a holding means, fixing an objective lens converging the light beam to be irradiated to the optical storage medium and a solid immersion lens with an electrode formed on a surface facing the optical storage medium and irradiating the light beam converged by the objective lens to the optical storage medium, in the focus direction on the basis of electrostatic capacitance formed by the electrode and the optical storage medium and of a reflected light from the optical storage medium so that the distance between the solid immersion lens and the optical storage medium is within the region where the near-field is formed.

16. A position control method of an optical system as set forth in claim 15, further comprising steps of

controlling said actuator on the basis of said electrostatic capacitance until the distance between said solid immersion lens and said optical storage medium becomes a target value, and
controlling said actuator on the basis of the reflecting light from said optical storage medium after the target value is reached.

17. A position control method of an optical system as set forth in claim 15, wherein

the numerical aperture of the optical system is greater than 1 and not greater than 3, and
the region where said near-field is formed is in a contactless state with the optical system and said optical storage medium, and said distance is in the range no more than 500 nm.

18. A position control method of an optical system for controlling the distance between an optical system which forms a near-field with an optical storage medium and irradiates a converging light beam to the optical storage medium and the optical storage medium by moving the optical system in a focus direction perpendicularly intersecting the storage surface of the optical storage medium, said method comprising the steps of

controlling a first actuator for moving a holding means, fixing an objective lens converging the light beam to be irradiated to the optical storage medium and a solid immersion lens with an electrode formed on a surface facing the optical storage medium and irradiating the light beam converged by the objective lens to the optical storage medium, move in the focus direction on the basis of electrostatic capacitance formed by the electrode and the optical storage medium and of a reflected light from the optical storage medium so that the distance between the solid immersion lens and the optical storage medium becomes within the region where the near-field is formed and
controlling a second actuator and moving the holding means in the radial direction of the optical storage medium on the basis of a reflected light from the optical storage medium.

19. A position control method of an optical system as set forth in claim 18, further comprising steps of

controlling said first actuator on the basis of said electrostatic capacitance until the distance between said solid immersion lens and said optical storage medium becomes a target value, and
controlling said second actuator on the basis of the reflecting light from said optical storage medium after the target value is reached.

20. A position control method of an optical system for controlling the distance between an optical system which forms a near-field with an optical storage medium and irradiates a converging light beam to the optical storage medium and the optical storage medium by moving the optical system in a focus direction perpendicularly intersecting the storage surface of the optical storage medium, said method comprising the steps of

controlling a first actuator for moving a holding means, fixing an objective lens converging the light beam to be irradiated to the optical storage medium and a solid immersion lens with an electrode formed on a surface facing the optical storage medium and irradiating the light beam converged by the objective lens to the optical storage medium, move in the focus direction on the basis of electrostatic capacitance formed by the electrode and the optical storage medium and of a reflected light from the optical storage modium so that the distance between the solid immersion lens and the optical storage medium becomes within the region where the near-field is formed,
moving an optical head carrying at least the optical system, the first actuator, and a second actuator in a direction perpendicularly intersecting the signal storage direction on the optical storage medium, and
moving an optical head carrying at least the optical system, the first actuator, and the second actuator in the signal storage direction on the optical storage medium.

**21.** A position control method of an optical system as set forth in claim 20, further comprising steps of

controlling said first actuator on the basis of said electrostatic capacitance until the distance between said solid immersion lens and said optical storage medium becomes a target value, and
controlling said second actuator on the basis of the reflecting light from said optical storage medium after the target value is reached.

**22.** A storage and reproduction apparatus comprising a light source,

an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means,
an actuator for moving the holding means in a focus direction perpendicularly intersecting the storage surface of the optical storage medium,
a control circuit for controlling the actuator on the basis of electrostatic capacitance formed by the electrode and the optical storage medium and of a reflected light from the optical storage medium so that the distance between the solid immersion lens and the optical storage medium becomes within the region where the near-field is formed,
a motor for rotating the optical storage medium when storing information and reproducing information,
an intensity modulation circuit for modulating the intensity of the light from the light source according to the information to be stored when storing information, and
an information detection circuit for detecting the recorded information from the reflected light reflected by the optical storage medium when reproducing information.

**23.** A storage and reproduction apparatus as set forth in claim 22, wherein

said control circuit controls said actuator on the basis of said electrostatic capacitance until the distance between said solid immersion lens and said optical storage medium becomes a target value, and
controls said actuator on the basis of the reflecting light from said optical storage medium after the target value is reached.

**24.** A storage and reproduction apparatus comprising a light source,

an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means,
a first actuator for moving the holding means in the focus direction perpendicularly intersecting the storage surface of the optical storage medium,
a second actuator for moving the holding means in the radial direction of the optical storage medium,
a first control circuit for controlling the first actuator on the basis of electrostatic capacitance formed by the electrode and the optical storage medium and of a reflected light from the optical storage medium so that the distance between the solid immersion lens and the optical storage medium becomes within the region where the near-field is formed,
a second control circuit for controlling the second actuator on the basis of the reflected light from the optical storage medium,
a motor for rotating the optical storage medium when storing information and reproducing information,
an intensity modulation circuit for modulating the intensity of the light from the light source according to the information to be stored when storing information, and
an information detection circuit for detecting the stored information from the reflected light reflected by the optical storage medium when reproducing information.

**25.** A storage and reproduction apparatus as set forth in claim 24, wherein

said first control circuit controls said first actuator on the basis of said electrostatic capacitance until the distance between said solid immersion lens and said optical storage medium becomes a target value, and
said second control circuit controls said second actuator on the basis of the reflecting light from said optical storage medium after the target value is reached.

**26.** A storage and reproduction apparatus as set forth in claim 24, further comprising a moving means for moving an optical head carrying at least said optical system, said first actuator, and said second actuator in the radial direction of said optical storage medium.

**27.** A storage and reproduction apparatus comprising a light source,

an optical system forming a near-field with an optical storage medium and irradiating a converging light beam to the optical storage medium, wherein an objective lens converging the light beam to be irradiated to the optical storage medium and a solid immersion lens with an electrode formed on a surface facing the optical storage medium and irradiating the light beam converged by the objective lens to the optical storage medium are fixed by a holding means,
a first actuator for moving the holding means in a focus direction perpendicularly intersecting the storage surface of the optical storage medium,
a second actuator for moving the holding means in a direction perpendicularly intersecting the signal storage direction on the optical storage medium,
a first control circuit for controlling the first actuator on the basis of electrostatic capacitance formed by the electrode and the optical storage medium and of a reflected light from the optical storage medium so that the distance between the solid immersion lens and the optical storage medium becomes within the region where the near-field is formed,
a second control circuit for controlling the second actuator on the basis of the reflected light from the optical storage medium,
a first moving means for moving an optical head carrying at least the optical system, the first actuator, and the second actuator in the direction perpendicularly intersecting the signal storage direction on the optical storage medium,
a second moving means for moving an optical head carrying at least the optical system, the first actuator, and the second actuator in the signal storage direction on the optical storage medium,
an intensity modulation circuit for modulating the intensity of the light from the light source according to the information to be stored when storing information, and
an information detection circuit for detecting the stored information from the reflected light reflected by the optical storage medium when reproducing information.

**28.** A storage and reproduction apparatus as set forth in claim 27, wherein

said first control circuit controls said first actuator on the basis of said electrostatic capacitance until the distance between said solid immersion lens and said optical storage medium becomes a target value, and
said second control circuit controls said second actuator on the basis of the reflecting light from said optical storage medium after the target value is reached.

# FIG. 1

EP 1 130 440 A2

# FIG. 2

Y : TRACKING DIRECTION
Z : STORAGE DIRECTION OF SIGNAL SERIES

FIG. 3

FIG. 4

Diagram labels: 100, 28, X, Y, 51, 11 SPINDLE MOTOR, 12 OPTICAL PICK-UP, 155 SLIDE MOTOR, 26 MOTOR DRIVING CIRCUIT, 18, 17, 14 RVCO, 13 VCO, 15 COMPARISON CIRCUIT, 16 PHASE COMPENSATION CIRCUIT, 22 CPU, 19 TRACKING MATRIX CIRCUIT, 20 PHASE COMPENSATION CIRCUIT, 21, 23 APC CIRCUIT, 24 INTENSITY MODULATION CIRCUIT, 25, Si, SM, 27 INFORMATION DETECTING CIRCUIT, 29 FOCUS ERROR DETECTING CIRCUIT, SA~SD, SA~SH, SA, SH, SP, Cg, ST, TE, So, FE

# FIG. 5

| AIR GAP A | 0nm | 50nm | 100nm | 200nm | 10 $\mu$ m |
|---|---|---|---|---|---|
| INTERVAL h | 2.00 $\mu$ m | 2.05 $\mu$ m | 2.10 $\mu$ m | 2.20 $\mu$ m | 12 $\mu$ m |
| ELECTROSTATIC CAPACITANCE Cg | 7.82pF | 7.63pF | 7.45pF | 7.11pF | 1.3pF |
| OSCILLATION FREQUENCY f | 4.45MHz | 4.48MHz | 4.51MHz | 4.57MHz | 6.34MHz |

# FIG. 6

# FIG. 7

# FIG. 8

```
            ( START )
                |
                v
S1 --| START FOCUS      |
     | CONTROL          |
                |
                v
S2 --| GENERATE START   |
     | SIGNAL ST        |
                |
                v
S3 --| START ROTATION   |
     | OF OPTIC DISK 51  |
                |
                v
S4 --< SPECIFIED        >-- NO -->
     < ROTARY           >
     < SPEED? >
                |
               YES
                |
                v
S5 --| LASER ON         |
                |
                v
              ( 9 )
```

# FIG. 9

S6 — SET AIR GAP
TO BE 100nm

S7 — END OF
PULL-IN OF OPTICAL
SYSTEM 10? — NO

YES

S8 — CHANGE ERROR
SIGNAL
(SET AIR GAP
TO BE 50nm)

S9 — END OF
PULL-IN OF OPTICAL
SYSTEM 10? — NO

YES

END

# FIG. 10

EP 1 130 440 A2

# FIG. 11A

# FIG. 11B